# EUROPÄISCHE PATENTSCHRIFT

(11) **EP 2 198 210 B1**
(45) Veröffentlichungstag und Bekanntmachung des Hinweises auf die Patenterteilung: **02.09.2015**
(21) Anmeldenummer: 08833702.7
(22) Anmeldetag: 22.09.2008
(51) Int. Cl.: F24J 3/08

(54) **Anlage zur Nutzung von Erdwärme**
A system for utilization of geothermal heat
Installation pour l'exploration de l'énergie géothermique

(30) Priorität: 28.09.2007 DE 102007047552
(43) Veröffentlichungstag der Anmeldung: 23.06.2010
(73) Patentinhaber: Geo-en Energy Technologies Gmbh, 12159 Berlin (DE)
(72) Erfinder: VIERNICKEL, Michael, 12107 Berlin (DE)
(74) Vertreter: Boeckh, Tobias
(86) Internationale Anmeldenummer: PCT/DE2008/001577
(87) Internationale Veröffentlichungsnummer: WO 2009/039839

(56) Entgegenhaltungen:
- WO-A-85/03994
- WO-A1-2005/059304
- CN-A- 1 945 164
- DE-C- 511 302
- GB-A- 2 120 302
- JP-A- 61 011 567
- SU-A1- 800 513
- US-A- 2 905 245
- US-A- 3 938 592
- US-A- 4 201 060
- US-A- 4 681 163
- US-A- 4 694 905
- US-A- 4 700 776
- US-A- 5 040 601
- US-A- 5 425 598
- US-A1- 2002 141 827
- "Bohrungen und Brunnenbau: Erfahrung und Können sind die besten Voraus setzungen für klares, reines Wasser aus der Tiefe", , 2 August 2008 (2008-08-02), XP55061168, Retrieved from the Internet: URL:http://www.ochs-bau.de/pdf/Ochs_Brosch _Bohrung.pdf [retrieved on 2013-04-25]
- "Veröffentlichungsdatum von "Bohrungen und Brunnenbau: Erfahrung und Können sind die besten Voraussetzungen für klares reines Wasser aus der Tiefe" (D7)", , 25 April 2013 (2013-04-25), XP055095836, [retrieved on 2014-01-10]
- Frank Hermann ET AL: "Einsatz von Glaskugeln als Ersatz für Filterkies in Brunnen", , 1 May 2008 (2008-05-01), XP055095813, Retrieved from the Internet: URL:http://www.sigmund-lindner.com/fileadm in/user_upload/downloads/Fachartikel_de/bb r_2008-4_de.pdf [retrieved on 2014-01-10]
- Anonymous: "Random close pack - Wikipedia, the free encyclopedia", , 9 October 2009 (2009-10-09), XP055095889, Retrieved from the Internet: URL:http://en.wikipedia.org/wiki/Random_cl ose_pack [retrieved on 2014-01-10]
- Nn: "Jahresinhaltsverzeichnis 2008", , 1 December 2008 (2008-12-01), pages 112-115, XP055169801, Retrieved from the Internet: URL:http://www.bbr-online.de/fileadmin/PDF /bbr/Jahresinhaltsverzeichnisse/Jahresinha lt_2008.pdf [retrieved on 2015-02-16]

## Beschreibung

Die Erfindung betrifft eine Anlage zur Förderung und Dekontamination von Grundwasser sowie zur Nutzung von Erdwärme sowie die Verwendung der erfindungsgemäßen Anlage.

Die Nutzung von Erdwärme wird den regenerativen Energien zugeordnet. Mit zunehmender Tiefe steigt die Temperatur im Erdreich an. Dieser Temperaturanstieg ist unterhalb 20 Metern nicht mehr von den Jahreszeiten oder dem Klima abhängig, sondern hängt im Wesentlichen von den geologischen und geothermischen Bedingungen ab. Aus diesem Grund bietet sich in vielen Regionen die Nutzung der Erdwärme zur Energiegewinnung an, da so eine emissionsneutrale, insbesondere im Hinblick auf COrEmissionen, und ungefährliche Energiegewinnung möglich ist

Aus dem Stand der Technik sind verschiedene Anlagen und Verfahren zur Nutzung von Erdwärme bekannt. Eine gängige Nutzungsmethode ist eine Erdwärmesonde, wie sie in der DE 29 35 832 A1 offenbart wird. Dabei wird in eine Bohrung im Erdreich ein U-Rohr eingebracht. In dem Rohr zirkulierende Flüssigkeit nimmt in der Tiefe Wärme aus der Umgebung auf, welche dann genutzt wird. Zur Unterstützung der Zirkulation ist eine Pumpe vorgesehen. Nachteilig an dieser Lösung ist, dass die Effizienz der Anlage konstruktionsbedingt eingeschränkt ist und Frostschutzmittel zugesetzt werden müssen, die eine Verschmutzungsgefahr darstellen.

In der JP 61 011567 A wird eine Vorrichtung zur Wärmegewinnung aus Untergrundwasser offenbart, bei der eine Zwischenplatte ein Hauptrohr in zwei Bereiche teilt. Der Zweck der Erfindung besteht darin, das Austrocknen von natürlichen Untergrundressourcen zu verhindern und das Absinken von Boden zu vermeiden.

In der Anmeldung SU 800 513 A1 wird eine Vorrichtung offenbart, bei der im oberen Bereich der Vorrichtung Wasser in ein Förderrohr einströmt und im unteren Bereich der Vorrichtung wieder an die Bodenumgebung abgegeben wird. Dabei wird das einströmende und a sauströmende Wasser zwar in unterschiedlichen Rohren geführt, allerdings weist die Vorrichtung der SU 800 513 A1 keinen Querverschluß auf, der den oberen Bereich der Vorrichtung vom unteren Bereich der Vorrichtung trennt.

In der WO 85/03994 A werden ein Verfahren und Tiefbohrbrunnen zur Gewinnung von geothermischer Energie offenbart, wobei aus dem Tiefbohrbrunnen die geothermische Wärmeenergie auf die Erdoberfläche gefördert wird, und das Wärmeträgermedium aus Umweltschutzgründen in die Erde zurückgepresst wird.

In der CN 1945164 A wird eine Vorrichtung zur Wärmegewinnung aus Untergrundwasser offenbart, die ein in eine Bohrung eines Brunnens zentral angeordnetes Hauptrohr aufweist, wobei das Hauptrohr durch einen Querverschluss in einen oberen und einen unteren Teil unterteilt wird. Grundwasser wird aus dem unteren Teil des Hauptrohres auf die Erdoberfläche gefördert und in den oberen Teil des Hauptrohres wieder an die Bodenumgebung abgegeben. Der Ringspalt zwischen dem Hauptrohr und der Bohrung ist mit einer porösen Schüttung gefüllt, welche auf der Höhe des Querverschlusses innerhalb des Hauptrohres die poröse Schüttung durch ein dichtendes Material unterbrochen ist.

Weitere Alternativen die der Geothermie zugeordnete werden sind Erdwärmekollektoren, welche sich durch oberflächennahe horizontale Verlegung auszeichnen und darin zirkulierende Sole sowie pumpenlose Erdwärmekollektoren mit Direktverdampfung eines Kältemittels.

Grundwasser bietet eine weitere Möglichkeit Erdwärme zu nutzen. Dabei wird Grundwasser durch einen Förderbrunnen an die Oberfläche gefördert, wo diesem mittels einer Wärmepumpe die Wärme entzogen wird. Anschließend wird das Wasser durch einen Injektionsbrunnen wieder in den Grundwasserteiter zurückgespeist. Nachteilig an dieser Lösung ist, dass getrennte Brunnen zur Förderung und zum Einleiten des Wassers erforderlich sind.

Die chemischen und physikalischen Parameter des aus dem Förderbrunnen entnommenen Wassers unterscheiden sich häufig bereits von dem Wasser in den wenige Meter entfernt liegenden Injektionsbrunnen dergestalt, dass sich chemische und Ausfällreaktionen abspielen die den Brunnen langfristig verstopfen. Zusätzlich ist durch die beim Übertagepumpen auftretenden Druckdifferenzen das Risiko der Ausgasung gelöster Gase und der damit verbundenen Ausfällreaktionen gegeben.

Die EP 0 386176 B1 offenbart eine Anlage zum Austausch von Energie zwischen Erdreich und einem Energietauscher über eine Kombination einer Vorlaufleitung mit einer Pumpe im Bohrloch und einer Rücklaufleitung. Das Bohrloch ist mit einer porösen Füllung versehen und es wird durch das Vorlaufrohr Wasser in das Bohrloch eingebracht, welches durch die poröse Verfüllung zu den Rücklaufleitungen gelangt. Die Rücklaufleitungen sind mit einer Kombination von Querverschlüssen und Durchtrittsöffnungen in Richtung der porösen Verfüllung versehen, so dass das Wasser bei der Förderung an die Erdoberfläche immer wieder die Rücklaufleitung verlassen muss. Durch diese besondere Ausgestaltung der Rücklaufrohre soll die Wärmeaufnahme des Wassers gesteigert werden. Nachteilig an dieser Lösung ist, dass diese nur über große Längen mit ausreichender Effizienz einsetzbar ist.

In der EP 0 755 497 B1 wird eine Anlage zur Gewinnung von Erdwärme offenbart, bei der im Außenbereich des Bohrloches Wasser bis zum Grund der Bohrung eingebracht wird. In einem definierten Abstand zum Grund der Bohrung ist ein Trennrohr angeordnet, welches im unteren Bereich eine Pumpe aufweist, die zur Förderung von Wasser an die Erdoberfläche vorgesehen ist. Der Bereich der Bohrung zwischen Austrittsöffnung der Wasser zuführenden Rohre und der seitlichen Öffnung des Trennrohres ist mit einer porösen Füllung versehen. Auch wenn durch die erfindungsgemäßen Maßnahmen der EP 0 755 497 B1 bevorzugt erwärmtes Wasser aus dem unteren Bereich der Bohrung aufgenommen werden soll, so ist es nachteilig, dass zwischen zuführendem und abführenden Rohr eine hydraulische Verbindung besteht, wodurch bevorzugt das kalte Wasser zu Tage gefördert wird, welches zuvor in das Bohrloch eingeleitet wurde. Dadurch wird die Effizienz erheblich gesenkt.

Bei denen aus dem Stand der Technik bekannten Lösungen werden bevorzugt getrennte Rohre im Bohrloch zur Förderung und Rückleitung des Grundwassers verwendet sowie ein getrennter Wärmetauscher als separate Anlage. Dies macht die aus dem Stand der Technik bekannten Anlagen aufwendig und verursacht dadurch hohe Kosten, weil größere Bohrkaliber erforderlich sind.

Die JP 58024762 beschreibt eine Methode zur Abfuhr von Erdwärme mit einem Hauptrohr, das oberhalb und unterhalb eines Querverschlusses mit Durchtrittsöffnungen ausgestattet ist. Dabei ist die Entnahme aus einer Grundwasser führenden Schicht und Einleitung in einen hydraulisch getrennten anderen Grundwasserleiter als wesentlich und grundsätzlich notwendig dargestellt. Hierdurch kommt es zu einer Vermischung verschiedener Grundwässer, die in der Regel verschiedene chemische und physikalische Wasserbeschaffenheit haben, z.B. Süßwasser und Salzwasser führen, was zu Ausfällreaktionen und der langfristigen Verstopfung der Brunnenfilterstrecken führen kann. Auch ist in den meisten Gebieten aus Gründen des Grundwasserschutzes und der Ökologie eine Vermischung verschiedener Grundwässer nicht gestattet und in Gebieten mit Grundwassemutzung zur Trinkwassergewinnung problematisch.

In zahlreichen Ländern ist eine technische Lehre wie die der JP 58 064 762 daher nicht genehmigungsfähig, da sie durch die Mischung chemisch differenter Wässerzu problematischen chemischen Reaktionen und Ausfällungen führen. Neben der sich hierdurch ergebenden Umweltbelastung bedeutet dies auch, dass die entsprechenden Brunnen nach einer gewissen Nutzungsdauer beschädigt werden, wobei die Beschädigung im Laufe der Zeit akkumuliert und so zum Totalausfall der Anlage führt.

Im Stand der Technik sind weiterhin Brunnen zur Nutzung von Erdwärme beschrieben worden, wie gemäß der DE 271 54 99, DE 28 50 865 oder der CH 65 3120.

Aufgabe der vorliegenden Erfindung ist es, eine Anlage zur Nutzung von Erdwärme zur Verfügung stellen, die eine effiziente thermische Anbindung gewährleistet.

Überraschenderweise hat sich gezeigt, dass durch eine Anlage zur Nutzung der Erdwärme das erfindungsgemäße Problem gelöst werden kann, wenn die Anlage ein in einer Bohrung eines Brunnens angeordnetes Hauptrohr aufweist, wobei das Hauptrohr durch einen Querverschluss in einen oberen und einen unteren Teil unterteilt vorliegt und der Querverschluss eine Öffnung aufweist, in der eine Vorrichtung angeordnet ist, die eine Strömung auslöst und/oder unterstützt, welche Wasser aus dem unteren Teil des Hauptrohres fördert, wobei die Vorrichtung mit einem bevorzugt isolierten Förderrohr verbunden ist, welches wiederum mit einem bevorzugt übertägigen geschlossenem Kreislauf verbunden ist, wobei der geschlossene Kreislauf an seinem anderen Ende in den oberen Teil des Hauptrohres mündet und das Hauptrohr ober- und unterhalb des Querverschlusses Durchtrittsöffnungen zur Umgebung aufweist, wobei die Durchtrittsöffnungen als Filterstrecken ausgebildet sind, und das Hauptrohr von einer porösen Schüttung, zumindest teilweise, bevorzugt völlig umgeben ist, welche bevorzugt den verbleibenden Hohlraum der Bohrung um das Hauptrohr umgibt, wobei auf der Höhe des Querverschlusses (innerhalb des Hauptrohres) die poröse Schüttung (außerhalb des Hauptrohres) durch ein dichtendes Material hydraulisch unterbrochen ist, wobei die poröse Schüttung eine Glasschüttung, bevorzugt eine Schüttung aus Glaskugeln ist, insbesondere mit einem Durchmesser von 0,5 bis 10 mm und wobei der effektive Porenraum der porösen Schüttung größer als 30 % ist und die Durchtrittsöffnungen in Form einer quer verlaufenden Schlitzung gestaltet sind, wobei eine Öffnungsweite der Schlitzung von innen nach außen zunimmt. Das isolierte Förderrohr besteht bevorzugt aus doppelwandigem Polyethylen, durch Längsstege gekammert und an den Enden durch angeschweißte Muffen druckdicht verschlossen, so dass die enthaltene Luft als Isolator wirkt und ein nahezu Temperaturverlustfreier Wasserdurchfluss bewirkt wird. Überraschend führt ein solches bevorzugtes Förderrohr zu besonders guten Eigenschaften der Vorrichtung und ihrer Verwendung. Als übertägig geschlossener Kreislauf im Sinne der Erfindung wird bevorzugt die Rohrführung vom Förderrohr aus der geothermischen Anlage durch eine Wärme austauschende Apparatur, bevorzugt eine Wärmepumpe zum Wärmeentzug oder ein Wärmetauscher zur Abfuhr von Wärme zum Zwecke der Kühlung, und die Rohrführung zurück zur geothermischen Anlage mit Anschluss an das Hauptrohr zur Reinjektion über die obere Filterstrecke im oberen Teil des Hauptrohres bezeichnet, diese kann bevorzugt Siebe oder anderweitige Wasser filternde Vorrichtungen enthalten, Absperrventile und Pumpen sowie Schutzeinrichtungen zur Überwachung der Wasserströmung und der Wassertemperatur.

Es war völlig überraschend, dass entgegen der Richtung der Entwicklung des Standes der Technik eine Vorrichtung zur Nutzung von Erdwärme besonders effizient eingesetzt werden kann, die keine hydraulisch getrennten wasserführenden Schichten bspw. mit verschiedenen Drücken oder verschiedenen Temperaturen nutzt Es lag für den Fachmann nicht nahe, dass er mit der Wasserent-/aufnahme innerhalb eines Horizontes verbleiben kann. Im Stand der Technik ging man bisher davon aus, dass es zu einem hydraulischen Kurzschluss käme, wenn man keine durch Grundwasserstauer hydraulisch getrennten Grundwässer nutzt. Grundwasserstauer sind im Sinne der Erfindung insbesondere Gesteinskörper oder Erdschichten mit einer niedrigen Wasserdurchlässigkeit und stauenden Eigenschaften im Verhältnis zum Grundwasser.

Zahlreiche Vorrichtungen des Standes der Technik sind deshalb auf hydraulisch getrennte wasserführende Schichten angewiesen. Durch den Einsatz der bekannten Vorrichtungen in solchen hydraulisch getrennten wasserführenden Schichten kommt es jedoch zu einer Mischung der chemisch differenten Wässer aus den verschiedenen Schichten, was zu chemischen Reaktionen und Ausfällungen führt.

Untersuchungen der Grundwasser führenden Schichten ergaben, dass die hydraulische Durchlässigkeit der aus Sanden und Kiesen bestehenden geologischen Formationen nicht in alle Richtungen gleichförmig ist. Vielmehr regelmäßig kommt es zu einer gerichteten Durchlässigkeit die in horizontaler Richtung um ein Vielfaches höher ist, als in vertikaler Richtung. Der Verlauf der hydraulischen Durchlässigkeit wird durch die Lagerung und Form der Sedimente gesteuert. Diese sind während der Entstehung dieser geologischen Formationen dergestalt absedimentiert oder geschwemmt worden, dass das Wasser vor allem im Wesentlichen parallel zum Boden bzw. zum Grundwasserspiegel fließt und ein Wasserverlauf in vertikaler Richtung ab- bzw. umgelenkt wird.

Diese Eigenschaft der Grundwasser führenden Sedimente kann man sich durch die beschriebene Technologie dergestalt zunutze machen, dass z.B. im unteren Teil dieser Formation Grundwasser abgepumpt wird und insbesondere in mehreren Metern Abstand darüber wieder reinjiziert wird. Zu beobachten ist dabei gemäß der erwähnten Durchlässigkeitsunterschiede, dass das Wasser nicht entsprechend der hierdurch hergestellten Druckdifferenzen den kürzesten Weg von oben nach unten nimmt, sondern einen weiten Umweg von einem Vielfachen der kürzesten Wegstrecke zirkulär um die Anlage herum zurück legt. Dabei wird ein großes Volumen des Grundwasserleiters durchströmt und dabei ein Wärmeaustausch ausgelöst, bevorzugt wenn das injizierte Wasser eine vom Grundwasser abweichende Temperatur hat. Durch Temperatur und Leistungsmessungen sowie Markierungstechniken, sogenannten Tracerversuchen, konnten Gesetzmäßigkeiten über das Ausmaß der durch Anwendung dieser Technologie erreichbaren Wärmeaustauscherkapazität abgeleitet und für die Konstruktion solcher Anlagen nutzbar gemacht werden. Es konnte gezeigt werden, dass die im Wesentlichen vertikal aufgebauten Druckdifferenzen nahezu ausschließlich Wasserbewegungen zwischen den Förder- und Injektionsstrecken auslösen, eine Beeinflussung der Grundwasseroberfläche kaum eintritt und auch von lateral keine frischen Wässer involviert werden. Das zirkulierende Wasser verbleibt innerhalb des konstruktionsgemäß angesprochenen Grundwasserleiters, immer im selben Milieu, so dass keine chemischen Reaktionen oder physikalischen Beeinflussungen, z.B. durch pH-Wert-Verschiebungen zu befürchten sind. Darüber und/oder darunter liegende Grundwasserstauer führen zu einer weiteren Abgeschlossenheit dieses Kreislaufs. Vorteilhafterweise wird durch die Ausgestaltung der Fördert und Injekfionsstrecken, die in Form von Durchbruchsöffnungen im Hauptrohr und die umgebende poröse Schüttung realisiert werden, bevorzugt die hydraulische Anbindung an den Grundwasserieiter bewerkstelligt. Hier wird durch Bemessung der Durchlässigkeit eine Anpassung an das umgebende Erdreich und Strömungssteuerung bewirkt. Diese führt zu Gleichförmigkeit der Strömung ohne Turbulenzen, insbesondere durch Einsatz von bevorzugten Glaskugeln als poröse Schüttung und strömungsoptimierter Durchbruchsöffnungen in Form von nach peripher sich weitenden Schlitzen vorzugsweise aus Edelstahl und der Anpassung der Öffnungen dergestalt, dass sich in gößerer Entfernung vom Querverschluss, sowohl in der Förder-, als auch der Injekfionsstrecke eine höhere Durchlässigkeit ergibt. So wird der Druckaufbau zwischen Förder- und Injektionsstrecke in einer Form beeinflusst, der eine Weitläufigkeit der Vertikalströmung zusätzlich steigert.

In einer bevorzugten Ausführungsform der Erfindung ist das in der Bohrung eines Brunnens angeordnete Hauptrohr zentral angeordnet. Bei dem dichtenden Material, welches die poröse Schüttung unterbricht, kann es sich vorzugsweise um quellende Tone, Zement oder vergleichbare, möglichst dauerplastische Materialien handeln.

Die erfindungsgemäße Anlage bzw. Vorrichtung weist vorzugsweise auf halber Höhe des mit Grundwasser gesättigten umgebenden Lockergesteins den o.g. Querverschluss auf. Selbstverständlich ist es auch möglich, dass der Querverschluss im unteren oder oberen Drittel, Viertel, Sechstel, Achtel oder völlig anders positioniert ist, das richtet sich insbesondere nach den hydraulischen Eigenschaften des mit Grundwasser gesättigten umgebenden Lockergesteins. Der Fachmann kann ohne selbst erfinderisch tätig zu werden die geeignete Positionierung mittels Auswertung der hydraulischen Eigenschaften des Lockersediments und Berücksichtigung bei thermohydraulischer numerischer (Strömungs-) Simulation feststellen. Es ist auch möglich, dass der Querverschluss ein um das Hauptrohr herum angeordneter oder das Hauptrohr durchgehender Materialblock ist. Wenn der Querverschluss außen um das Hauptrohr herumgeführt wird, weist das Hauptrohr im Inneren eine Vorrichtung oder Merkmale auf, die sicherstellen, dass das einströmende Grundwasser beispielsweise die Pumpe oder eine andere Vorrichtung, die eine Strömung initiiert oder bewirkt, passiert. Das dichtende Material und der Querverschluss sind demgemäß wirkverbunden, um ein gerichtetes Strömungsverhalten des unten in das Hauptrohr einströmenden Grundwassers sicherzustellen. Der Querverschluss und das dichtende Material kann im Sinne der Erfindung daher eine Einheit bilden oder aber aus zwei unterschiedlichen Elementen bestehen. Demgemäß wird vorteilhafterweise in einer Bohrung ein Hauptrohr eingebaut, welches bevorzugt zentral in der Bohrung angeordnet ist und durch das dichtende Material und den Querverschluss zwei unterschiedliche Filterstrecken aufweist, die übereinander mit einem Abstand zueinander gelegen sind.

Über die den unteren Teil des Hauptrohres umgebende, bevorzugt aus Glaskugeln bestehende poröse Schüttung strömt Grundwasser durch die Durchtrittsöffnungen ein, welches im oberen Teil des Hauptrohres, d.h. über dem dichtenden Material bzw. dem Querverschluss wieder in das Erdreich austritt, nachdem es durch den im wesentlichen übertägigen geschlossenen Kreislauf geleitet wurde und von diesem wieder durch das Hauptrohr eingeleitet wird, wobei die Einleitung des Wassers in das Erdreich den Ausstrom des Wassers darstellt, welches aus dem übertägigen geschlossenen Kreislauf strömt. Dieses aus dem geschlossenen Kreislauf eingeleitete Wasser wird durch die Durchtrittsöffnung und die umgebende bevorzugt aus Glaskugeln bestehende poröse Schüttung oberhalb des Querverschlusses ins Erdreich geleitet. Durch die Kombination der erfindungsgemäßen Merkmale treten nur sehr langsame Fließgeschwindigkeiten und kaum Turbulenzen auf, sodass wenig bis gar keine chemischen, biologischen oder anderweitig bedingten Ausfällreaktionen stattfinden

Es war besonders überraschend, dass die Kombination der Merkmale wie der porösen Schüttung bevorzugt aus Glaskugeln mit den anderen Merkmalen der Erfindung zu einer verbesserten Vorrichtung bzw. zu einer verbesserten Verwendung der Nutzung von Erdwärme führt. Die poröse Schüttung um das Hauptrohr führt zu optimiert langsamen Fließgeschwindigkeiten, verhindert durch die glatten Oberflächen der Glaskugeln deren bakteriellen Besatz und damit auch die Verursachung von bilogischen Reaktionen, z.B. Eisenoxidation mit die Anlage langfristig verstopfenden Abbauprodukten.

Weiterhin ist erfindungsgemäß vorgesehen, dass die Durchtrittsöffnungen als Filterstrecken ausgebildet sind. Durch diese erfindungsgemäße Maßnahme soll sicher gestellt werden, dass gelöste Partikel nicht dazu führen, dass sich die Durchtrittsöffnungen zusetzen und so der Förderkreislauf unterbrochen wird. Im Übrigen gewährleistet die Ausgestaltung der unteren Durchtrittsöffnungen als Filterstrecken zusätzlich, dass die im Hauptrohr angeordnete Pumpe nicht durch feste Bestandteile beschädigt wird.

Die der vorgestellten technische Lehre bevorzugt zugrunde liegende moderne thermohydraulische Strömungssimulation in Form numerischer Computerprogramme wurde aus zahlreichen Untersuchungen abgeleitet und validiert und dient insbesondere der Dimensionierung der das Hauptrohr umgebenden porösen Schüttung und Anordnung der Durchtrittsöffnungen sowie deren Öffnungsflächen. Dadurch wird der hydraulische Anschluss an den Grundwasserhorizont für die beabsichtigte konzentrische Vertikalzirkulation innerhalb des Grundwasserhorizontes reguliert. Durch die entsprechend der Stimulation abgestuften hydraulische Durchlässigkeit der porösen Schüttung und Rohröffnungen wird die Wassermenge auf den verschiedenen Ebenen derart eingestellt dass sich eine maximal weitläufige seitliche Durchströmung des Grundwassedeiters ergibt und damit gleichzeitig ein lokaler Druckausgleich eingestellt, so dass kein Grundwasserspiegel-Absenk-Trichter entsteht. Diese dadurch gestaltete Strömungssteuerung verhindert den sich sonst nahe der Sperrschicht einstellenden hydraulischen Kurzschluss, der die Leistung entsprechend dem bislang gültigen Stand der Technik erheblich herabsetzen würde. Gleichzeitig kann durch die Strömungssteuerung eine gleichmäßige Durchströmung über die gesamte Filterlänge gewährleistet werden, was für die Minimierung der auftretenden Geschwindigkeiten und der damit verbundenen Turbulenzen von entscheidender Bedeutung ist.

Durch diese erfindungsgemäßen Merkmale soll sicher gestellt werden, dass das zirkulierende Wasser ausreichend Zeit und Wegstrecke für größtmögliche Wärmeübertragung hat und gleichzeitig vorhandene Partikel nicht dazu führen, dass sich die Durchtrittsöffnungen zusetzen und so der Förderkreislauf unterbrochen wird. Im Übrigen gewährleistet die Ausgestaltung insbesondere der unteren Durchtrittsöffnungen als Filterstrecken zusätzlich, dass die im Hauptrohr angeordnete Pumpe nicht durch feste Bestandteile beschädigt wird.

Als Filterstrecke wird im Sinne der Erfindung die Strecke verstanden, in der das zu filternde Medium, bevorzugt Grundwasser ggf. kontaminiert mit Schweb- und Schadstoffen, das Filtermaterial passiert. Die Filterstrecke kann dabei auch in mehrere, nicht horizontal oder vertikal durchströmte Filterabschnitte unterteilt sein, die unmittelbar oder über Fließstrecken, die frei von Filtermaterial sind, miteinander verbunden sind. Als Filtermaterialien wie poröse Schüttungen, bevorzugt aus Glaskugeln oder aber Mikrofilter oder Membranfilter oder aber Materialien, die mithilfe von verschieden großen Poren feste Bestandteile des Wassers trennen. Die Durchtrittsöffnungen der Filterstrecken sind erfindungsgemäß in Form einer quer verlaufenden Schlitzung gestaltet, diese von innen nach außen in der Öffnungsweite, bevorzugt 1 - 4mm, zunehmen, so dass sich über deren Tiefe keine relevante Strömungsbeschleunigung einstellt und im Fall einer Reinigungsmaßnahme von innen nach außen z.B. mit einem Wasserdruckstrahl die umgebende poröse Schüttung gut erreichbar ist. Diese kann beispielsweise durch die Schüttung von Filterkies oder anderer vorzugsweise runder Körper, deren Durchmesser gemäß der thermohydraulischen numerischen Strömungssimulation bevorzugt auf das umgebende Lockergestein, die Filteröffnungen im Hauptrohr und die gewünschten hydraulischen Vorgänge abgestimmt sein müssen, geschehen.

Im Sinne der Erfindung ist es in dieser Ausführungsform besonders vorteilhaft, wenn der effektive Porenraum bzw. die hydraulische Durchlässigkeit im Bereich größer 30 % liegt und eine sehr hohe bis maximale Gleichförmigkeit der Einzelteile des Schüttgutes hinsichtlich der Größe und Kugelförmigkeit gegeben ist, das geschieht durch bevorzugte Verwendung von Glaskugeln bevorzugt im Durchmesser von 0,5 bis 10 mm insbesondere von 1,5 bis 5 mm. Es war völlig überraschend, dass Glaskugeln für die Schüttung mit überraschenden Vorteilen eingesetzt werden können. Diese ermöglichen durch ihre Gleichförmigkeit im Kaliber maximale Weiten der Durchbruchsöffnungen, sind mechanisch stabiler als der üblicherweise in der Brunnentechnologie eingesetzte Filterkies, sind chemisch neutral und sehr standfest sowie aufgrund ihrer glatten Oberflächen unempfindlich für Anhaftungen von Bakterien und Verschmutzungen und leicht zu reinigen.

In der Kombination der dargestellten Merkmale der Durchbruchsöffnungen und der porösen Schüttung sowie deren Dimensionierung liegt die Unempfindlichkeit der Vorrichtung und ihrer Verwendung gegen die sonst problematischen Ausfällreaktionen und Verstopfungen von Grundwasseranlagen begründet.

Die erfindungsgemäße Lehre stellt demgemäß eine Kombination dar, bei der mehrere Elemente zur Erreichung eines technischen Gesamterfolges zusammenwirken. Durch die funktionelle Wechselwirkung der einzelnen Elemente der erfindungsgemäßen Kombination mit dem umgebenden Lockergesteins unter Anwendung thermohydraulischer numerischer Strömungssimulation wird die Lösung der technischen Aufgabe realisiert. Die vereinigten Elemente in der Kombination der erfindungsgemäßen Lehre wirken gemeinsam auf ein einheitliches Ziel hin. Der einheitlich-technische Erfolg der Erfindung beruht auf den Wirkungen der einzelnen Elemente, die sozusagen die Klammer für die erfindungsgemäße Kombination darstellen. Der Stand der Technik gab dem Durchschnittsfachmann keine Anregung, gerade die beanspruchten Elemente der erfindungsgemäßen Kombination innerhalb eines Grundwasserhorizonts zusammenwirken zu lassen. Es war völlig überraschend, dass eine Anlage zur Nutzung von Erdwärme im Grundwasserleiter so gestaltet und dimensioniert werden kann, dass sie besonders effizient und störungsfrei arbeitet, wenn die das Hauptrohr zumindest teilweise, bevorzugt vollständig, umgebende poröse Schüttung und die Durchtrittsöffnungen des Hauptrohres gemäß den Ergebnissen einer thermohydraulischer numerischer Strömungssimulation als Filterstrecken ausgebildet sind und die beschriebenen Merkmale aufweisen.

Es lag für den Fachmann nicht nahe, dass das Zusammenwirken der beanspruchten Komponenten gemäß der erfindungsgemäßen Anlage zu besonders guten Resultaten bei der Wärmezufuhr oder Abfuhr über einen langen Zeitraum führt, da eine Distanz der Förder- und Injektionsstelle des zum Wärmeaustausch genutzten Grundwassers von mehr als dem Dreifachen der hier empfohlenen Ausführung im Stand der Technik als unverzichtbar galt

Diese Merkmale führen in Kombination mit dem Querverschluss innerhalb des Hauptrohres, wodurch die poröse Schüttung insbesondere aus Glaskugeln bevorzugt hydraulisch unterbrochen ist, zu einer Vorrichtung, welche für die Zufuhr von Wärme genauso eingesetzt werden kann, wie für die Abfuhr von Wärme. Es lag für den Fachmann nicht nahe, dass das Zusammenwirken der beanspruchten Komponenten gemäß der erfindungsgemäßen Anlage bzw. gemäß der erfindungsgemäßen Vorrichtung zu besonders guten Resultaten bei der Wärmezufuhr oder -abfuhr über einen langen Zeitraum führt.

Eine Distanz der Förder und -Injektionsstrecke von mindestens 15 Meter galt im Stand der Technik als unverzichtbar, wohingegen durch die erfindungsgemäße Vorrichtung die Distanz der Förder- und Injektionsstrecken auf deutlich weniger als 10 Meter bis zu 5 Metern reduziert werden kann.

Die anmeldungsgemäße Lehre zeichnet sich durch folgende Merkmale aus:
- Abkehr vom technisch Üblichen: Während sich bislang für leistungsfähigen Wärmaustausch mit dem Grundwasser mindestens zwei Brunnen mit Distanzen von mindestens 15 Metern als erforderlich erwiesen hatten, können mit der Anwendung der vorgestellten Erfindung unter Anwendung moderner numerischer thermohydraulischer Simulationsverfahren diese Brunnen innerhalb einer Bohrung vertikal übereinander angeordnet werden wobei deutlich weniger als 10 Meter Abstand der als Filterstrecken ausgeführten Durchbruchsöffnungen des Hauptrohres einzuhalten sind,
- neue Aufgabenstellung: Die Kombination elastischer Wärmetauscherrohre, bevorzugt aus z.B. Polyethylen oder Edelstahl ermöglicht einen preiswerten, einfach zu bewerkstelligen Ausbau, der ebenso leicht, z.B. für Wartungszwecke, demontiert werden kann und hohe Wärmetauscherleistung ohne Förderung potenziell aggressiver Wässer zu empfindlichen Nutzerstrukturen ermöglicht,
- Vorliegen eines seit langem ungelösten dringenden Bedürfnisses für die Lösung des mit der Erfindung gelösten Problems: Insbesondere innerstädtisch und ähnlich begrenzten Platzverhältnissen ist leistungsfähige Nutzung von Geothermie bislang nicht realisierbar, mit der vorgestellten Erfindung nun auch ökonomisch möglich,
- bisheriges vergebliches Bemühen der Fachwelt Optimierungen des Wärmeübergangs bei üblichen Sondensystem sind im Stand der Technik am Ende ihres Potenzials angelangt, das umgebende Erdreich limitiert den Wärmetransport, so dass nur durch mehrfache Installation größere Leistungen ermöglicht werden können. Die Förderung und Injektion von Grundwasser führte regelmäßig zu Problemen bei der Injektion, so dass diese Technologie nur unter wenigen Umständen eingesetzt wird,
- die Einfachheit der Lösung spricht für erfinderische Tätigkeit, insbesondere da sie kompliziertere Lehren ersetzt: Die alleinige Bewegung vom natürlich vorhandenen Grundwasser unterhalb des Grundwasserspiegels mobilisiert das Wärmepotenzials eines großen Einflussbereichs und saisonale thermische Regenration, die induzierte Vertikalzirkulation ermöglicht weiträumige Erfassung der thermalen Energie mit nur geringen Temperaturveränderungen und ohne die durch Sauerstoffkontakt oder Druckwechsel ausgelösten Probleme.
- die Entwicklung der wissenschaftlichen Technik ging in eine andere Richtung: Die Probleme chemischer und Ausfällreaktionen in Brunnensystemen wurde bislang durch Druckhaltung und Stickstoffbeaufschlagung begegnet, statt auf kleinem Raum innerhalb eines einheitlichen chemischen und physikalischen Milieu zu operieren, so dass diese Probleme vermieden werden, auch ist der Einsatz spezieller Filterschüttungen und Filterrohre geeignet bakterielle und anderweitige Anhaftungen zu vermeiden, Turbulenzen zu mindern und einen weitgehend ungehinderten Zugang zur Wartung zu ermöglichen,
- entwicklungsstraffende Leistung,
- Fehlvorstellungen der Fachwelt über die Lösung des entsprechenden Problems (Vorurteil): Die gerichtete hydraulische Durchlässigkeit der Grundwasser führenden Lockergesteine beträgt horizontal bis zum 10fachen der vertikalen Durchlässigkeit, woraus sich eine bislang nicht für möglich gehaltene Nutzung auch schmaler Grundwasserhorizonte in Form vertikaler Durchströmung in großem Radius ergibt, statt zwei in großer Distanz zueinender gelegener Brunnen zu errichten und eine horizontale Durchströmung auszulösen.
- Ein technischer Fortschritt besteht in der Leistungssteigerung der innerhalb einer Bohrung zu realisierenden Wärmetauscherleistung, dadurch begründeten Verbilligung und Ersparnis an Zeit und Material bei der Errichtung, erhöhter Zuverlässigkeit im Betrieb, weitgehende Wartungsfreiheit,
- da aus einer Vielzahl von Möglichkeiten eine bestimmte gewählt wurde, deren Ergebnis nicht vorausgesagt werden konnte, handelt es sich um ein patentwürdigen glücklichen Griff,
- Irrtümer in der Fachliteratur bzw. sehr widersprüchliche Darstellung zum Erfindungsgegenstand,
- junges Gebiet der Technik,
- Kombinationserfindung, d.h. mehrere bekannte Elemente werden zu einer Kombination zusammengeführt, die einen überraschenden Effekt aufweist: Erst durch Einführung moderner geothermischer Messverfahren und numerischer thermohydraulischer Simulationsverfahren ist es möglich geworden mit wenig Aufwand leistungsfähige Anlagen unter Einhaltung der gesetzlichen und technischen Rahmenbedingungen zu konstruieren und zu errichten,
- Lizenzvergabe,
- Lob der Fachwelt und
- wirtschaftlicher Erfolg.

Insbesondere die vorteilhaften Ausführungsformen der Erfindung weisen mindestens einen oder mehrere der genannten Vorteile auf.

Es war völlig überraschend, dass die Kombination aus einem Hauptrohr, welches in der Bohrung eines Brunnen platziert wird und welches zur Umgebung Durchtrittsöffnungen aufweist, die bevorzugt als Filterstrecken ausgebildet sind, in Verbindung mit mindestens einem Querverschluss in dem Hauptrohr in Kombination mit einem isolierten Förderrohr, welches bevorzugt mit einer Pumpe verbunden ist, wobei das Förderrohr mit einem bevorzugt übertägigen geschlossenen Kreislauf verbunden ist, zu einer verbesserten Anlage, bzw. zu einer verbesserten Verwendung der Anlage zu Nutzung von Erdwärme führt, wenn der geschlossene Kreislauf an seinem einen Ende im oberen Teil des Hauptrohrs mündet und das Hauptrohr ober und unterhalb des Querverschlusses Durchtrittsöffnungen zur Umgebung aufweist und das Hauptrohr von einer porösen Glasschüttung umgeben ist, welches den verbleibenden Hohlraum der Bohrung um das Hauptrohr umgibt, wobei auf Höhe des Querverschlusses innerhalb des Hauptrohres die poröse Schüttung durch ein dichtendes Material unterbrochen ist, sodass die poröse Schüttung hydraulisch unterbrochen ist.

Im Übrigen zeichnet sich die erfindungsgemäße Anlage dadurch aus, dass letztlich nur ein Rohr in die Bohrung eingebracht werden muss, in Kombination mit der besonderen Ausbildung und Anordnung der Schüttung, welche zwischen den Filterstrecken dichtend ausgebildet ist.

Bei der erfindungsgemäßen Anlage treten nur sehr geringe, gleichmäßige, Fließgeschwindigkeiten mit laminarem Strömungsprofil innerhalb eines chemisch und physikalisch identischen Milieu auf, wodurch das Auftreten von Ausfällreaktionen von Substanzen, die im Grundwasser gelöst sind, und Aktivität (von z.B. eisenoxidierenden) Bakterien minimiert wird. Es war überraschend, dass die erfindungsgemäße Kombination der technischen Merkmale zu einer Minimierung der Aktivität von Bakterien führt.

Insbesondere aus vorteilhaften Ausgestaltungen der erfindungsgemäßen Anlage zur Nutzung von Thermalenergie resultiert unter anderem ein nur geringer Eingriff in den Wasserhaushalt und somit in das ökologische System insgesamt. Der wesentliche Grund dafür ist, dass das Grundwasser letztlich nur bewegt wird und nicht gefördert wird, weshalb auch eine Anlage gemäß der vorliegenden Erfindung unproblematischer im Hinblick auf amtliche Genehmigungsverfahren ist, da Grundwasserfördergebühren und Überwachungspflicht bei Reinjektion entbehrlich sind.

Eine Anlage gemäß der vorliegenden Erfindung verursacht vorteilhafterweise nur geringfügige thermische Beeinflussungen im Gegensatz zu einer starken lokalen Überwärmung oder Abkühlung bei geschlossenen (Sonden-)Anlagen aus dem Stand der Technik.

Die erfindungsgemäße Anlage zeichnet sich im Übrigen durch eine 5 bis 10-fach höhere Leistung im Bezug auf die Nutzung von Thermalenergie gegenüber bereits bekannten Anlagen aus.

Im Sinne der Erfindung kann es sich bei der Vorrichtung, die eine Strömung auslöst oder initiiert beispielsweise um eine elektrische oder mechanische Vorrichtung oder eine Kombination aus beiden handeln. Im Falle einer mechanischen Vorrichtung, kann beispielsweise eine Schnecke, ein Schaufelrad oder ähnliches vorgesehen sein und im Falle einer elektrischen Vorrichtung eine Pumpe. Bevorzugt sind diese Vorrichtungen oder Teile hiervon in der Öffnung des Querverschlusses angeordnet. Selbstverständlich kann es auch vorgesehen sein, dass die Pumpe oder wichtige Elemente der mechanischen Anordnung, bevorzugt der Schnecke, überirdisch angeordnet sind, so dass nur ein Teil dieser Anlagen in der Öffnung des Querverschlusses positioniert vorliegt. Im Sinne der Erfindung ist bevorzugt sicherzustellen werden, dass eine Strömung zwischen dem oberen und dem unteren Teil des Hauptrohres stattfindet, das heißt insbesondere über- und unterhalb des Querverschlusses, der auch als Dichtmanschette bezeichnet werden kann. Bevorzugt wird eine Pumpe verwendet, da diese preiswert und energieeffizient sowie marktgängig, gut regelbar und leicht austauschbar ist. Selbstverständlich ist es möglich, dass die Pumpe vollständig in der Öffnung angeordnet ist.

Es war völlig überraschend, dass die Schüttung aus Glas zu besonders überraschenden Vorteilen führt. Besonders bevorzugt ist es, wenn die Schüttung vor allem eine Glasschüttung aus Glaskugeln ist. Die poröse Schicht wird über ihre Porosität und ihren Feststoffanteil definiert. Im Sinne der Erfindung wird die Porosität einer entsprechenden Schüttung als ein Maß für die Dichte der Schüttung mit ihren Hohlräumen verstanden. Sie kann daher auch als relative Dichte im Vergleich zu einem massiven Stoff definiert werden. Die Gesamtporosität der Schüttung setzt sich zusammen aus der Summe der Hohlräume, die untereinander und mit der Umgebung in Verbindung stehen und denen nicht miteinander verbundenen Hohlräumen. Die Porosität von Schüttungen beschreibt das Volumen von Hohlraumanteilen, die von beweglichen, wanderungsfähigen Medien wie Wasser und/oder Gas, eingenommen werden kann. Für die Gesamtporosität kann auch der Terminus des Undichtigkeitsgrades verwendet werden.

Die poröse Schüttung wird auf der Höhe bzw. im Bereich des Querverschlusses innerhalb des Hauptrohres durch ein dichtendes Material unterbrochen, bei dem es sich beispielsweise um Ton handeln kann. Im Sinne der Erfindung bezeichnet man als Ton Mineralkömer eines natürlichen Ursprungs mit einer Korngröße bzw. einem Äquivalentdurchmesser von kleiner als 20 µm, bevorzugt kleiner als 10 µm, besonders bevorzugt kleiner als 2 µm. Im Sinne der Erfindung kann es sich bei dem Ton vor allem um Tonmineralien handeln, die Silizium, Sauerstoff, Wasserstoff bzw. Magnesium und Aluminium umfassen. Es kann sich beispielsweise um Silikate oder um die Mineralien Goethit oder Gibbsit handeln, die keine Silikate sind. Selbstverständlich kann auch kieselsaures Kalzium mit Anteilen an Aluminium und Eisen als dichtendes Material für den Querverschluss verwendet werden.

Besondere Aufmerksamkeit ist der Gestaltung der Filterstrecke zu widmen, die eine kontinuierliche Geschwindigkeitsentwicklung des Grundwassers aus der Peripherie im Lockergestein bis zum Innenraum des Hauptrohres gewährleistet und in ihren hydraulischen Parametern der Durchlässigkeit der umgebenden geologischen Formation in vertikaler und horizontaler Richtung angepasst werden muss. Hierzu sind Untersuchungen des Lockergesteins anhand von Bohrproben erforderlich und eine Abstimmung mit den Durchbruchsöffnungen im Hauptrohr. Die Durchbruchsöffnungen sind bevorzugt mit einer Aufweitung nach außen, z.B. in keilförmiger Ausgestaltung der Stege zwischen den Öffnungen, so dass eine Zusetzung (sogenannte Kolmation) vermieden wird und bei maximaler Öffnung nur geringe Strömungsbehinderung für minimalen Energieverbrauch der Zirkulationspumpe besteht und ein guter Zugang für Hochdruckdüsenstrahlreinigung o.a. Wartungsverfahren gegeben ist. Damit minimiert sich das Auftreten von Wirbeln und Turbulenzen, die eine vorzeitige Brunnenalterung bewirken würden. Das einzusetzende Schüttgut stellt eine elastische Lagerung der Brunnenausbauten dar, die z.B. bei Erdbeben und kleineren Erdrutschen Schutz verleiht und eine optimale hydraulische Anbindung ermöglicht. Bevorzugt als poröse Füllung ist Schüttgut mit glatten u.U. polierten Oberflächen des Schüttguts geeignet, hohen Durchsatz bei minimalen Anhaftungen zu bewirken, so dass bei der initialen "Entwicklung" des Brunnens eine kontinuierliche Verteilung von groben Kömem an der Bohrlochwand bis zum Feinsand in der Peripherie. Das Schüttgut sollte ausreichend mechanisch und chemisch stabil sein, sowie hohe Masshaltigkeit der Durchmesser aufweisen, so dass große Durchbruchsöffnungen im Hauptrohr ermöglicht werden.

In einer weiteren besonders bevorzugten Ausführungsform der Erfindung ist vorgesehen, dass die strömungsauslösende Vorrichtung eine Pumpe ist. Vorzugsweise werden hier niedertourige Kreisel-Brunnenpumpen mit Nassläufer Unterwassermotor in Permanentmagnettechnologie und den Brunnen schonenden Sanftanlauf über Frequenzumrichtung eingesetzt. Mit Hilfe der Pumpe wird eine Strömung des Wasser aus dem unteren Bereich der geologischen Formation durch den unteren Teil des Hauptrohrs in den oberen befördert und von dort wieder in den Grundwasserhorizont injiziert. Die Pumpe muss dabei neben den vernachlässigbaren Rohrwiderständen den hydraulischen Widerstand im durchströmten Grundwasserleiter überwinden Wenn statt der Pumpe beispielsweise eine Schnecke bzw. Förderschnecke verwendet werden soll, so handelt es sich hierbei um eine Welle, um die ein oder mehrere schneckenförmig gewundene Gänge, bevorzugt in Form von flachen Blechen, Gummilappen oder anderen ausgewählten Kunststoffen oder Metallen oder Keramiken gewendelt werden. Hierbei ist die Welle in ein Rohr oder auch ein Halbrohr gesetzt. Die Förderschnecken können als starre oder flexible, biegsame Schnecken ausgeführt sein. Bei flexiblen Schnecken ist die Welle ebenfalls flexibel. Selbstverständlich ist es auch möglich, auf die Welle zu verzichten, um so eine seelenlose Schnecke oder Spirale bereitzustellen, wobei sich die Begrenzungen um die eigene gebogene Achse drehen. Vorteilhafterweise wird in diesem Fall die stabilisierende Wirkung der starren Welle durch Profile erzielt, die in die Spirale eingearbeitet sind. Wenn die erfindungsgemäße Vorrichtung zum Auslösen, Unterstützen, Initiieren und/oder Aufrechterhalten einer Strömung eine Pumpe ist, werden diese als Fluidenergiemaschinen eingesetzt, bei denen die dem Fluid Wasser innewohnende Energie durch Aufbringung mechanischer Arbeit erhöht wird. Der Druck des Wassers wird erhöht oder ihm wird Bewegungsenergie mitgegeben, bevorzugt zum Zwecke einer Ortsveränderung. Erfindungsgemäß zählen auch Rührwerke oder umgebaute Verdichter oder Gebläse zu den Pumpen. Die Pumpen können insbesondere als Verdrängerpumpen oder Strömungspumpen ausgebildet sein. Selbstverständlich ist es auch möglich, dass die Pumpen Strahlpumpen sind, wie Wasserstrahlpumpen oder aber Mammutpumpen, Blasenpumpen, Stoßheber oder Pferdekopfpumpen.. Wenn die eingesetzten Pumpen Verdrängungspumpen sind, so kann es sich hierbei beispielsweise um Membranpumpen, Rotationskolbenpumpen, Exzenterschneckenpumpen, Impellerpumpen, Kolbenpumpen, Schlauchpumpen, Schraubenspindelpumpen, Sinuspumpen oder Zahnriemenpumpen handeln. Wenn es sich bei den Pumpen um Strömungspumpen handelt, können diese bevorzugt Axialpumpen, Diagonalpumpen und/oder Radialpumpen sein.

In einer weiteren bevorzugten Ausführungsform der Erfindung ist vorgesehen, dass es sich bei dem dichtenden Material, welches die poröse Schüttung trennt, um Ton oder Zement oder andere kompakte Materialen handelt, die vorteilhafterweise billig erworben werden können oder radioaktiv oder magnetisch oder auch anders markierbar sind um deren korrekte Einbaulage auch nachweisen zu können. Ton und Tonmineralien können im Sinne der Erfindung synonym behandelt werden. Ton ist im Sinne der Erfindung eine Hauptbodenart des Feinbodens. Erfindungsgemäße Tonmineralien sind beispielsweise Materialien, die Kaolinit, Chrysotil, Illit, Chlorit, Montmorillonit, Beidellit, Nontronit, Saponit oder andere umfassen. Die Tonmineralien sind sehr weich, sie reagieren plastisch auf mechanische Beanspruchung und können sich beim Erhitzen in härtere und feste Materialen umwandeln, wie beispielsweise Keramik. Die Tonmineralien besitzen eine große spezifische Oberfläche, die dazu führt, dass Stoffe adsorbiert und desorbiert werden können. Vorteilhafterweise haben Tonmineralien oder Ton eine geringe Wasserdurchlässigkeit und können so überraschend gut als dichtendes Material verwendet werden. Aber auch verschiedene Zementarten eignen sich sehr gut zum Abdichten. Durch die Zumahlung unterschiedlicher Zusatzstoffe wie Hüttensand, Puzzolan, Flugasche und/oder Kalkstein können die Zemente mit verschiedenen chemischen und physikalischen Eigenschaften, insbesondere im Hinblick auf ihre dichtenden Eigenschaften, hergestellt werden. Ton oder Zement eignen sich überraschend gut, um die poröse Schüttung hydraulisch zu trennen, insbesondere Tonpellets lassen sich als Schüttgut leicht einbringen und quellen innerhalb mehrerer Stunden zu einer homogenen dauerplastischen Masse ohne das Risiko benachbarte poröse Schüttung zu durchsetzen und damit unerwünscht hydraulisch abzudichten.

In einer weiteren bevorzugten Ausführungsform ist vorgesehen, dass sich bevorzugt in dem isolierten Förderrohr der Wärmeträger Wasser befindet, bzw. dass der Wärmeträger Wasser in den Rohren des bevorzugt übertägigen Kreislaufs zirkuliert. Bei diesen Rohren handelt es sich bevorzugt um solche, die übertägig mit dem geschlossenen Kreislauf wirkverbunden sind. Erfindungsgemäß ist es vorgesehen, dass in dem bevorzugt übertägigen geschlossenen Kreislauf der Wärmeübergang stattfindet. Hierbei kann es bevorzugt sein, dass ein Teil des gewonnen Grundwassers aus dem geschlossenen Kreislauf abgeleitet wird, wodurch mehr warmes Grundwasser nachströmen kann, was überraschenderweise zu einer Leistungssteigerung führt.

Die im Wesentlichen übertägige Wärmeübertragung in dem geschlossenen Kreislauf kann durch die bekannten Wärmeübertragungselemente stattfinden.

In einer bevorzugten Ausgestaltungsform der erfindungsgemäßen Anlage befinden sich Rohre mit dem Wärmeträger in den übertägig angeordneten Rohren des geschlossenen Kreislaufs.

Erfindungsgemäß ist z.B. vorgesehen, dass die z. B. übertägigen Rohre mit Wärmeträger als Platten mit geeigneten Hohlräumen zur Zirkulation des Wassers ausgebildet sind. Bevorzugt ist dabei, dass derartige Platten z.B. wabenförmig angeordnete Hohlräumen aufweisen, durch welche ein Wärmeträger strömen kann

In einer weiteren bevorzugten Ausführungsform der Erfindung besteht das Hauptrohr bevorzugt aus PVC, Stahl, insbesondere Edelstahl, oder einer Kombination hieraus. Die Wärmetauscher, beispielsweise insbesondere die Wärmetauscherrohre, können ihrerseits insbesondere aus Stahl, bevorzugt Edelstahl, Polyethylen oder Kupfer oder aus einer Kombination dieser Elemente bestehen. Neben PVC können selbstverständlich auch alle anderen thermoplastischen Kunststoffe, insbesondere ein amorpher thermoplastischer Kunststoff, eingesetzt werden. Neben dem konkret benannten Polyethylen können auch andere Polyolefine eingesetzt werden.

Die Erfindung betrifft demgemäß auch die Verwendung der erfindungsgemäßen Anlage zur Gewinnung von Erdwärme aber auch zur Abfuhr von Wärme und zusätzlich zur Dekontamination von Grundwasser aber auch zur Gewinnung von Strom.

Überraschenderweise kann die Gewinnung von Erdwärme mit der Abfuhr von Wärme durch die erfindungsgemäße Anlage sehr gut miteinander kombiniert werden, so dass eine solche Anlage bei kalten Umgebungstemperaturen beispielsweise im Winter zum Heizen oder Erwärmen von Gebäuden herangezogen werden kann und bei hohen Umgebungstemperaturen - beispielsweise im Hochsommer - zur Kühlung von Gebäuden genutzt werden kann. Hierzu sind zwischen den einzelnen Nutzungsarten nur geringe konstruktive Veränderungen der Anlage erforderlich, die der Fachmann ohne selbst erfinderisch tätig zu werden durchführen kann.

Demgemäß kann die Grundwassertemperatur auch zur Kühlung verwendet werden, so dass die Anlage sehr gut dazu geeignet ist, Thermalenergie zum Entzug von Wärme durch direkte Wärmeableitung aus in Kühlflächen zirkulierendem Wärmeträger oder als Kaltwassersatz für Kompressionsklimaanlagen zu nutzen. Demgemäß kann das geförderte Grundwasser nicht nur dazu verwendet werden, um Erdwärme zu nutzen, sondern es kann in einer vorteilhaften Ausführungsform auch vorgesehen sein, dass das geförderte Grundwasser dazu verwendet werden kann, um zu kühlen und so synergistisch saisonale Wärmespeicherung zu realisieren und damit die mögliche Jahresheiz- und Kühlarbeit der Anlage erheblich und langfristig zu steigern. Die Anlage kann daher auch zur Abfuhr von Wärme verwendet werden.

Neben der Gewinnung von Erdwärme und der Abfuhr von Wärme kann die Anlage auch problemlos zur Gewinnung von Strom herangezogen werden, wenn beispielsweise thermoelektrische Bauteilen der erfindungsgemäßen Vorrichtung eingebaut sind oder aus Tiefen mit Temperaturen von mehr als 100°C zum Turbinenbetrieb gefördert werden kann.

Es war besonders überraschend, dass die erfindungsgemäße Anlage auch zur Dekontamination von Grundwasser geeignet ist.

Die erfindungsgemäße Anlage kann ebenfalls als Förderbrunnen genutzt werden oder durch Teilableitung des zirkulierenden Grundwassers in ihrer Leistungsfähigkeit gesteigert werden.

Im Zusammenhang mit der Dekontamination können die erfindungsgemäßen Anlagen zunächst auch zur Überwachung des Grundwassers eingesetzt werden. Sofern durch diese überwachende oder beobachtende Tätigkeit bzw. das Monitoring Stoffgehalte im zufließenden Grundwasser bestimmt werden, die auf eine Verunreinigung schließen lassen, kann neben der Bestimmung der Ausbreitung der Verunreinigung auch eine Dekontamination des durchströmten Erdreichs oder vorbeiströmenden verunreinigten Wassers vorgenommen werden. Bei der Verwendung der erfindungsgemäßen Anlage zur Dekontamination handelt es sich um ein hydraulisches Sanierungsverfahren, bei dem die Entnahme und Infiltration bevorzugt im gleichen Bohrloch stattfindet. Damit wird eine laterale Mobilisierung bzw. Verschleppung von Schadstoffen vermieden und eine lokale Reinigungswirkung entfaltet bzw. bei stark strömendem Grundwasser eine reinigende Barriere errichtet. Die Anlagen zur eigentlichen Dekontamination können je nach Schadstoff untertägig oder übertägig installiert werden, besonders zu nennen die Stripping-Verfahren.

Ein weiterer Aspekt der Erfindung betrifft die Verwendung der erfindungsgemäßen Vorrichtung zur Förderung von Grundwasser.

Die für die Vorrichtung und ihre Vorzugsvarianten beschriebenen Vorteile gelten selbstverständlich auch für die Verwendungen der erfindungsgemäßen Vorrichtungen und ihrer Vorzugsvarianten.

Weiterhin ist vorgesehen, dass die Zirkulation in den Rohren mit Wärmeträger durch eine weitere Pumpe unterstützt wird. Der Wärmeträger kann so gewählt werden, dass dieser bei Erwärmung verdampft. Das geförderte Grundwasser kann demnach nicht nur dazu verwendet werden, um Erdwärme zu nutzen, sondern es ist erfindungsgemäß auch vorgesehen, dass gefördertes Grundwasser dazu verwendet werden kann um einen in gesonderten Wärmetauschern zirkulierenden Wärmeträger verdampfen zu lassen. Als Material für das Hauptrohr einer erfindungsgemäßen Anlage wird bevorzugt PVC, Edelstahl oder eine Kombination daraus verwendet. Es können aber auch andere Materialien mit vergleichbaren Eigenschaften gewählt werden, so dass diese von der Erfindung mit umfasst sind.

Für die Rohre mit dem Wärmeträger ist bevorzugt die Verwendung von Edelstahl, Polyethylen oder Kupfer oder einer Kombination daraus vorgesehen.

Die erfindungsgemäße Anlage zeichnet sich dadurch aus, dass letztlich nur ein Rohr in die Bohrung eingebracht werden muss, in Kombination mit der besonderen Anordnung der Schüttung, welche zwischen den Filterstrecken dichtend ausgebildet ist. Es sind kein getrennter Förder- und Injektionsbrunnen erforderlich. Gegenüber konventionellen Förder- und Schluckbrunnen sind nur eine Bohrung und darin nur ein Filterrohr und ein isoliertes Förderrohr notwendig, wodurch sich der Platz- und Kostenbedarf ermäßigt.

Bei einer erfindungsgemäßen Anlage treten nur sehr geringe und langsame Fließgeschwindigkeiten auf, wodurch das Auftreten von Ausfällreaktionen von Substanzen, die im Grundwasser gelöst sind, minimiert wird.

Weiterhin beeinflusst eine erfindungsgemäße Anlage im Vergleich zu konventionellen Förder- und Schluckbrunnen den Grundwasserspiegel und die Grundwasserströmung erheblich weniger, da Wasser nahezu dort wieder eingeleitet wird, wo es letztlich auch entnommen wird. Dadurch wird zudem auch das Risiko einer chemischen Veränderung des Wassers vermindert.

Die erfindungsgemäße Anlage zeichnet sich im Übrigen durch eine 5 bis 10-fach höhere Leistung im Bezug auf die Nutzung von Thermalenergie gegenüber bereits bekannten Anlagen aus.

Die Erfindung betrifft demgemäß eine Anlage zur Nutzung von Erdwärme sowie die Verwendung einer erfindungsgemäßen Anlage. Erfindungsgemäß ist eine Anlage zur Nutzung von Erdwärme mit einem in einer Bohrung eines Brunnens zentral angeordneten Hauptrohr vorgesehen, wobei das Hauptrohr durch einen Querverschluss in einen oberen und einen unteren Teil unterteilt wird und der Querverschluss eine Öffnung aufweist, in der eine Pumpe angeordnet ist, welche Wasser aus dem unteren Teil des Hauptrohres fördert, wobei die Pumpe mit einem isolierten Förderrohr verbunden ist, welches wiederum mit einem übertägigen geschlossenen Kreislauf verbunden ist, wobei der geschlossene Kreislauf an seinem anderen Ende in den oberen Teil des Hauptrohres mündet und das Hauptrohr oberhalb und unterhalb des Querverschlusses Durchtrittsöffnungen zur Umgebung aufweist und das Hauptrohr von einer porösen Schüttung umgeben ist, welche den verbleibenden Hohlraum der Bohrung um das Hauptrohr umgibt, wobei auf der Höhe des Querverschlusses innerhalb des Hauptrohres die poröse Schüttung durch ein dichtendes Material unterbrochen ist, so dass die poröse Schüttung hydraulisch unterbrochen ist

Die Erfindung wird im Folgenden anhand von Beispielen und Abbildungen beschrieben, ohne darauf beschränkt zu sein. Es zeigt
- **FIG 1**: Schematische Schnittzeichnung durch eine Anlage
- **FIG 2**: Schematische Schnittzeichnung durch eine Anlage mit mehreren Grundwässem

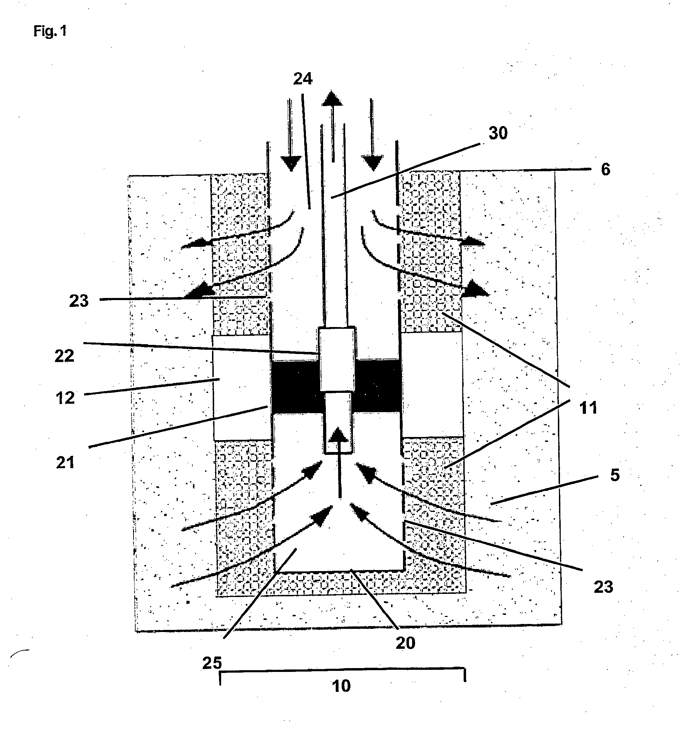

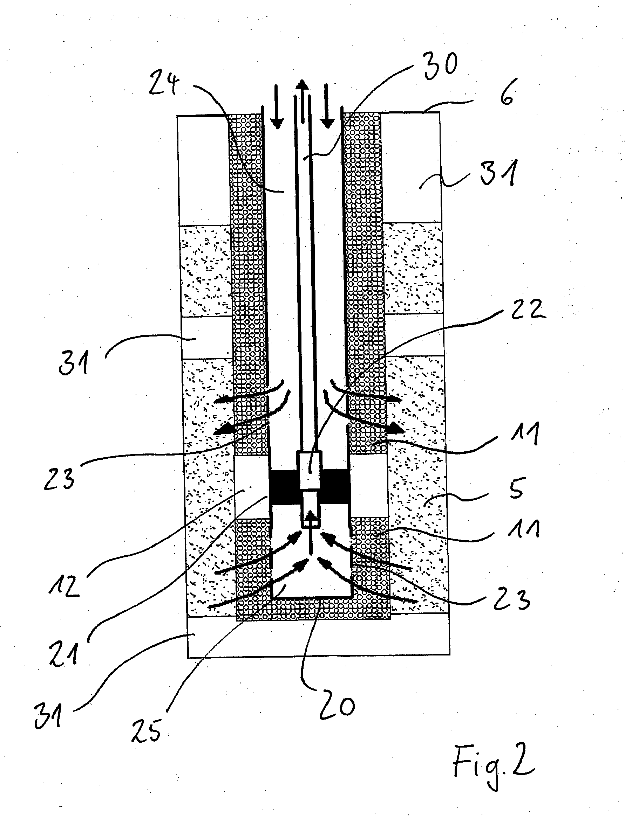

Figur 1 oder 2 zeigen eine schematische Schnittzeichnung durch eine erfindungsgemäße Anlage mit Hauptrohres (20). Dabei ist eine Bohrung (10) im Erdreich (5) angeordnet und die Bohrung (10) schließt an der Erdoberfläche (6) ab. Innerhalb der Bohrung (20) ist vorzugsweise zentral das Hauptrohr (20) angeordnet. Dieses wird von einer porösen Schüttung (11) umgeben. Das Hauptrohr (20) weist vorzugsweise auf halber Höhe eines Grundwasserhorizonts einen Querverschluss (21) auf, der in der Mitte eine Öffnung aufweist, in der eine Pumpe (22) angeordnet ist. Durch den Querverschluss (21) entsteht in dem Hauptrohr (20) ein oberer und ein unterer Innenraum (24, 25) des Hauptrohres (20). Das Hauptrohr weist in seinem oberen und unteren Teil Durchtrittsöffnungen (23) auf, welche den Einstrom des Grundwassers in das Hauptrohr ermöglichen bzw. den Ausstrom des Wassers, welches aus dem übertägigen geschlossenen Kreislauf eingeleitet wird.

Die Pumpe (22) fördert das Wasser vorzugsweise in Richtung Erdoberfläche (6). In den Figuren 1 oder 2 ist die Strömungsrichtung des Wassers durch Pfeile dargestellt.

An den oberen Teil der Pumpe schließt ein vorzugsweise isoliertes Förderrohr (30) an, durch welches das Wasser in einen übertägigen Kreislauf gefördert wird.

Auf der Höhe des Querverschlusses (21) innerhalb des Hauptrohres ist in der umgebenden porösen Schüttung (11) rund um das Hauptrohr ein dichtendes Material (12) eingebracht, so dass die poröse Schüttung (11) in einen oberen und unteren Teil getrennt wird, welche beide hydraulisch voneinander getrennt sind. Höhe des Querverschlusses bedeutet, dass im Bereich des Querverschlusses die poröse Schüttung hydraulisch unterbrochen ist, wobei das die Unterbrechung verursachende Material eine identische, ähnliche, geringere oder größere Höhe bzw. Dicke aufweisen kann wieder Querverschluss selbst.

Figur 2 zeigt eine Vorrichtung wie in Figur 1, wobei in Figur 2 mehrer Grundwässer, die durch natürliche Sedimentationsschichten oder Grundwasserstauer (31) voneinander getrennt sind. Die Figurenerläuterung für Figur 1 gilt für Figur 2 entsprechend.

Die Erfindung ist nicht auf die in den Abbildungen dargestellten Ausführungsformen beschränkt.

### Bezugszeichenliste

- 5: Erdreich
- 6: Erdoberfläche
- 10: Bohrung
- 11: poröse Schüttung
- 12: dichtendes Material
- 20: Hauptrohr
- 21: Querverschluss
- 22: Pumpe
- 23: Durchtrittsöffnung
- 24: oberer Innenraum Hauptrohr
- 25: unterer Innenraum Hauptrohr
- 30: Förderrohr
- 31: Sedimentationsschichten oder Grundwasserstauer

## Patentansprüche

1. Anlage zur Nutzung von Erdwärme umfassend eine Bohrung (10) eines Brunnens und ein darin bevorzugt zentral angeordnetes Hauptrohr (20),
**dadurch gekennzeichnet, dass**
das Hauptrohr (20) durch einen Querverschluss (21) in einen oberen und einen unteren Teil unterteilt wird und der Querverschluss (21) eine Öffnung aufweist, in der eine strömungsauslösende- oder unterstützende Vorrichtung, bevorzugt eine Pumpe angeordnet ist, welche Wasser aus dem unteren Teil des Hauptrohres fördert, wobei bevorzugt die Pumpe (22) mit einem bevorzugt isolierten Förderrohr (30) verbunden ist, welches wiederum mit einem übertägigen geschlossenen Kreislauf verbunden ist, wobei der geschlossene Kreislauf an seinem anderen Ende in den oberen Teil des Hauptrohres (20) mündet und das Hauptrohr (20) oberhalb und unterhalb des Querverschlusses (21) Durchtrittsöffnungen (23) zur Umgebung aufweist, wobei die Durchtrittsöffnungen (23) als Filterstrecken ausgebildet sind, und das Hauptrohr (20) von einer porösen Schüttung (11) umgeben ist, welche den verbleibenden Hohlraum der Bohrung (10) um das Hauptrohr (20) umgibt, wobei auf der Höhe des Querverschlusses (21) innerhalb des Hauptrohres (20) die poröse Schüttung (11) durch ein dichtendes Material (12) unterbrochen ist, so dass die poröse Schüttung (11) hydraulisch unterbrochen ist, wobei die poröse Schüttung (11) eine Glasschüttung, bevorzugt eine Schüttung aus Glaskugeln ist, insbesondere mit einem Durchmesser von 0,5 bis 10 mm und wobei der effektive Porenraum der porösen Schüttung größer als 30 % ist und die Durchtrittsöffnungen (23) in Form einer quer verlaufenden Schlitzung gestaltet sind, wobei eine Öffnungsweite der Schlitzung von innen nach außen zunimmt.

2. Anlage nach Anspruch 1,
**dadurch gekennzeichnet, dass**
es sich bei dem dichtenden Material (12), welches die poröse Schüttung (11) trennt um Ton oder Zement handelt.

3. Anlage nach Anspruch 1 oder 2,
**dadurch gekennzeichnet, dass**
das Hauptrohr (20) bevorzugt aus PVC, Edelstahl oder einer Kombination daraus besteht.

4. Verwendung einer Anlage nach wenigstens einem der Ansprüche 1 bis 3 zur Gewinnung von Erdwärme.

5. Verwendung einer Anlage nach wenigstens einem der Ansprüche 1 bis 3 zur Abfuhr von Wärme.

6. Verwendung einer Anlage nach wenigstens einem der Ansprüche 1 bis 3, zur Förderung von Grundwasser.

7. Verwendung einer Anlage nach wenigstens einem der Ansprüche 1 bis 4, zur Dekontamination von Grundwasser.

8. Verwendung nach dem vorhergehenden Anspruch,
**dadurch gekennzeichnet, dass**
die Entnahme und Infiltration in der gleichen Bohrung stattfindet.

9. Verwendung einer Anlage nach wenigstens einem der Ansprüche 1 bis 3, zur Gewinnung von Strom.

## Claims

1. System for utilizing geothermal energy, comprising a borehole (10) of a well and a main pipe (20) arranged, preferably centrally, therein,
**characterized in that**
the main pipe (20) is subdivided, by a transverse closure (21), into an upper part and a lower part and the transverse closure (21) has an opening, in which is arranged a flow-triggering or -assisting apparatus, preferably a pump, which delivers water from the lower part of the main pipe, wherein preferably the pump (22) is connected to a preferably insulated delivery pipe (30), which, in turn, is connected to a closed circuit above ground, wherein the closed circuit, at its other end, opens out into the upper part of the main pipe (20) and the main pipe (20), above and beneath the transverse closure (21), has through-openings (23) to the surroundings, wherein the through-openings (23) are in the form of filter routes, and the main pipe (20) is enclosed by a porous loose fill (11), which encloses the remaining cavity of the borehole (10) around the main pipe (20), wherein, at the level of the transverse closure (21) within the main pipe (20), the porous loose fill (11) is interrupted by a sealing material (12), and therefore the porous loose fill (11) is interrupted hydraulically, wherein the porous loose fill (11) is a loose glass fill, preferably a loose fill made up of glass balls, in particular with a diameter of 0.5 to 10 mm, and wherein the effective pore volume of the porous loose fill is greater than 30% and the through-openings (23) are configured in the form of transversely running slots, wherein a slot-opening extent increases from the inside to the outside.

2. System according to Claim 1,
**characterized in that** sealing material (12), which separates the porous loose fill (11), is clay or cement.

3. System according to Claim 1 or 2,
**characterized in that** the main pipe (20) consists preferably of PVC, stainless steel or a combination thereof.

4. Use of a system according to at least one of Claims 1 to 3 for recovering geothermal energy.

5. Use of a system according to at least one of Claims 1 to 3 for dissipating heat.

6. Use of a system according to at least one of Claims 1 to 3 for delivering groundwater.

7. Use of a system according to at least one of Claims 1 to 4 for decontaminating groundwater.

8. Use according to the preceding claim,
**characterized in that**
the removal and infiltration operations take place in the same borehole.

9. Use of a system according to at least one of Claims 1 to 3 for generating electricity.

## Revendications

1. Installation pour l'exploitation de l'énergie géothermique, comprenant un forage (10) d'un puits et un tuyau principal (20) agencé dans celui-ci, de préférence au centre,
**caractérisée en ce que**
le tuyau principal (20) est divisé en une partie supérieure et une partie inférieure par un joint transversal (21), le joint transversal (21) comportant une ouverture dans laquelle est agencé un dispositif chargé de déclencher ou de favoriser l'écoulement, de préférence une pompe transportant de l'eau provenant de la partie inférieure du tuyau principal, la pompe (22) étant reliée à un tuyau de transport (30) de préférence isolé, lequel est à son tour relié à un circuit fermé à ciel ouvert, le circuit fermé débouchant dans la partie supérieure du tuyau principal (20) à son autre extrémité, et le tuyau principal (20) comportant des ouvertures de passage (23) sur l'environnement au-dessus et en dessous du joint transversal (21), les ouvertures de passage (23) étant conçues comme des sections filtrantes, et le tuyau principal (20) étant entouré par une matière poreuse en vrac (11) entourant l'espace creux restant du forage (10) autour du tuyau principal (20), la matière poreuse en vrac (11) étant interrompue par un matériau d'étanchéité (12) à la hauteur du joint transversal (21) à l'intérieur du tuyau principal (20), de telle façon que la matière poreuse en vrac (11) est interrompue de façon hydraulique, la matière poreuse en vrac (11) étant une matière en vrac à base de verre, de préférence des billes de verre en vrac, en particulier avec un diamètre de 0,5 à 10 mm, et le volume effectif des pores dans la matière poreuse en vrac étant supérieur à 30 %, et les ouvertures de passage (23) étant conçues sous la forme d'une fente s'étendant transversalement, une largeur d'ouverture de la fente augmentant de l'intérieur vers l'extérieur.

2. Installation selon la revendication 1,
**caractérisée en ce que**
le matériau d'étanchéité (12) séparant la matière poreuse en vrac (11) est de l'argile ou du ciment.

3. Installation selon la revendication 1 ou 2,
**caractérisée en ce que**
le tuyau principal (20) est de préférence constitué de PVC, d'acier inoxydable ou d'une combinaison de ceux-ci.

4. Utilisation d'une installation selon l'une au moins des revendications 1 à 3 pour la production d'énergie géothermique.

5. Utilisation d'une installation selon l'une au moins des revendications 1 à 3, pour l'extraction de chaleur.

6. Utilisation d'une installation selon l'une au moins des revendications 1 à 3, pour le transport d'eaux souterraines.

7. Utilisation d'une installation selon l'une au moins des revendications 1 à 4, pour la décontamination d'eaux souterraines.

8. Utilisation selon la revendication précédente,
**caractérisée en ce que**
l'extraction et l'infiltration sont effectuées dans le même forage.

9. Utilisation d'une installation selon l'une au moins des revendications 1 à 3, pour la production d'électricité.
